# EUROPEAN PATENT APPLICATION

(11) **EP 3 444 379 A1**
(43) Date of publication of application: **20.02.2019**
(21) Application number: 17799289.8
(22) Date of filing: 12.05.2017
(51) Int. Cl.: C23F 11/00, C09K 3/10, F16J 15/10

(54) **CORROSION PREVENTION METHOD FOR SURFACE OF ALUMINIUM-BASED MEMBER**

(30) Priority: 17.05.2016 JP 2016099080
(71) Applicant: NOK Corporation, Tokyo 105-8585 (JP)
(72) Inventor: HAMADA Norihiro, Fujisawa-shi Kanagawa 251-0042 (JP); KODA Yutaka, Fujisawa-shi Kanagawa 251-0042 (JP); SUZUKI Kiyohiro, Fujisawa-shi Kanagawa 251-0042 (JP); YU Nan, Aso-shi Kumamoto 869-2231 (JP)
(74) Representative: Prüfer & Partner mbB Patentanwälte · Rechtsanwälte
(86) International application number: PCT/JP2017/017968
(87) International publication number: WO 2017/199865

(57) **Abstract**

The present invention is to provide a method for preventing corrosion capable of sufficiently protecting a surface of an aluminum-based member (in particular, a contact surface with a gasket) from corrosion, particularly when the surface of the aluminum-based member is sealed by the gasket. The method for preventing corrosion of a surface of an aluminum-based member constituting a structure that sandwiches the gasket together with another member in a press contact state, characterized in that a surfactant is made to adhere to the surface of the aluminum-based member.

## Description

### Technical Field

The present invention relates to a corrosion prevention method for protecting a surface of an aluminum-based member (in particular, a contact surface with a gasket) from corrosion, when the surface of the aluminum-based member is sealed by the gasket.

### Background Art

In vehicles and general purpose machines, for example, in automobiles, gaskets are used in an engine, an apparatus which houses electronic components in its inner part, and the like, so as to seal a housing. The gasket is elastically deformed by being sandwiched between a pair of members, for example, which form the housing by being combined with each other, in a compressed state, and seals a space between the pair of members to seal the housing.

Automobiles occasionally travel in a coastal area or in an area where a snow melting agent is sprayed. At this time, when salt water and/or the snow melting agent adhere to the components of the automobiles and there is a gap between a member that clamps the gasket and the gasket, there are cases where the salt water and/or a component of the snow melting agent infiltrate into the inside from the gap and remain in the gap. Due to this salt water or the component of the snow melting agent which remains in the gap, there are cases where corrosion (crevice corrosion) occurs in the member that clamps the gasket. In the case when this corroded portion has exceeded a sealing line of the gasket, the sealing function of the gasket results in being deteriorated or disappearing.

In order to solve the problem of the crevice corrosion which occurs between the member for clamping the gasket and the gasket, a technique of applying a water-repellent coating to a member for clamping the gasket, a technique of blending a corrosion inhibitor into a rubber composition constituting the gasket, and the like, have been investigated (Patent Literatures 1 and 2).

By the way, in recent years, in an automotive field, active progress has been made for reduction in weight so as to improve fuel economy, and the adoption of aluminum-based members, which are lighter than iron-based members, is expanding. Regarding such aluminum-based members, an aluminum-based alloy material is widely used which contains, for example, Cu and/or Si. In general, aluminum-based members are excellent in corrosion resistance compared to iron-based members, but an aluminum-based alloy material containing Cu and Si, or the like, tends to be easy to cause the above described crevice corrosion due to the influence of Cu and Si of the alloy component. Because of the above reason, it is not possible to sufficiently protect an aluminum-based base material that clamps a gasket from corrosion, by conventional techniques as in the above described Patent Literatures 1 and 2.

### Document List

### Patent Literatures

Patent Literature 1: Japanese Patent Application Publication No. 7-021682
Patent Literature 2: Japanese Patent Application Publication No. 3-203940

### Summary of Invention

### Technical Problem

Then, it is an object of the present invention to provide a method for preventing corrosion capable of sufficiently protecting a surface of an aluminum-based member (in particular, a contact surface with a gasket) from corrosion, particularly when the surface of the aluminum-based member is sealed by the gasket.

### Solution to Problem

The present inventors have made an extensive investigation on the above described problems, and as a result have found out that it is possible to sufficiently protect the surface of the aluminum-based member (seal area in particular) from corrosion by making a surfactant adhere to the surface of the aluminum-based member constituting the structure which sandwiches the gasket together with another member in a press contact state, when the surface of the aluminum-based member is sealed by the gasket, and thereby an excellent sealing function can be obtained, and on the basis of such a knowledge, have accomplished the present invention.

Specifically, the summary and the constitution of the present invention are as follows.
[1] A method for preventing corrosion of a surface of an aluminum-based member constituting a structure that sandwiches a gasket together with another member in a press contact state, characterized in that
   a surfactant is made to adhere to the surface of the aluminum-based member.
[2] The method for preventing corrosion of a surface of an aluminum-based member according to aspect [1], wherein
   the surfactant exuded from the gasket in the press contact state is supplied to the surface of the aluminum-based member, and thereby
   the surfactant is made to adhere to the surface of the aluminum-based member.
[3] The method for preventing corrosion of a surface of an aluminum-based member according to aspect [1] or [2], wherein
   the gasket is a gasket for preventing corrosion including a rubber elastic body and the surfactant, and
   the surfactant exists at least in an inner part of the rubber elastic body, in such an impregnated state of being capable of exuding from a surface of the rubber elastic body.
[4] The method for preventing corrosion of a surface of an aluminum-based member according to any one aspect of [1] to [3], wherein
   the rubber elastic body is a cross-linked molded article of a rubber composition containing at least one rubber selected from an ethylenepropylene-diene ternary copolymer rubber (EPDM), a nitrile rubber (NBR) and a hydrogenated nitrile rubber (HNBR).
[5] The method for preventing corrosion of a surface of an aluminum-based member according to any one aspect of [1] to [4], wherein
   the aluminum-based member is made from an aluminum-based alloy.
[6] The method for preventing corrosion of a surface of an aluminum-based member according to any one aspect of [1] to [5], wherein
   the surfactant is applied to the surface of the aluminum-based member before sandwiching the gasket, and thereby the surfactant is made to adhere to the surface of the aluminum-based member.

### Effects of Invention

According to a method for preventing corrosion of the present invention, it is possible to sufficiently protect a surface of an aluminum-based member (seal area in particular) from corrosion, by making a surfactant adhere to the surface of the aluminum-based member constituting a structure which sandwiches a gasket together with another member in a press contact state, when the surface of the aluminum-based member is sealed by the gasket, and it is possible to maintain an improved sealing function.

### Description of Embodiments

### <Method for preventing corrosion of surface of aluminum-based member>

The method for preventing corrosion of a surface of an aluminum-based member of the present invention is a method for preventing corrosion of an aluminum-based member constituting a structure which sandwiches a gasket together with another member in a press contact state, and is characterized in that the method makes a surfactant adhere to the surface of the aluminum-based member.

According to such a method, it is possible to sufficiently protect the surface of the aluminum-based member (seal area in particular) from corrosion, particularly when the surface of the aluminum-based member is sealed by the gasket, and it is possible to maintain an excellent sealing function.

Hereinafter, the structure and the method for preventing corrosion will be individually explained.

### 1. Structure

The structure according to the present invention includes: a gasket; and an aluminum-based member which sandwiches the gasket together with another member in a press contact state. According to such a structure, it is possible to form a desired sealing structure between the aluminum-based member and another member.

### 1-1. Aluminum-based member

The aluminum-based member is a member constituting the above described structure, and is at least one member out of two members facing each other with a gasket interposed between the members.

Here, the aluminum-based member is a member made from aluminum or an aluminum-based alloy. In addition, the aluminum-based alloy is an alloy in which the main component (component of which content is largest among those of constituent components) is aluminum, and alloy components other than aluminum include copper (Cu), silicon (Si), zinc (Zn), iron (Fe) and magnesium (Mg).

Normally, members made from aluminum of which the purity is high resists being corroded. Because of the above reason, the method for preventing corrosion of the present invention is more suitable for a member made from an aluminum-based alloy of which the contact surface with the gasket, in particular, tends to be easily corroded (crevice corrosion).

### 1-2. Other member

In the above described structure, the other member which clamps the gasket together with the aluminum-based member is not limited in particular, and may be an aluminum-based member, a metal member other than the aluminum-based member, or a resin member. In addition, the method for preventing corrosion of the present invention is suitable particularly for the case where both the two members clamping the gasket are aluminum-based members.

Incidentally, the above described two members may be any member as long as the member can clamp the gasket, and the shape of the member, the properties of the pressing surface and the like are not limited in particular, and can be appropriately selected according to the purpose.

### 1-3. Gasket

The gasket is composed of a rubber elastic body, is arranged between the aluminum-based member and the other member, is sandwiched by the members in a press contact state, and thereby plays a role of forming a sealing structure between the aluminum-based member and the other member.

As such a rubber elastic body, a rubber elastic body made from a known rubber material can be used. As the rubber material, a rubber material having water resistance is preferable, and the examples of the material include a rubber composition containing at least one rubber selected from an ethylenepropylene-diene ternary copolymer rubber (EPDM), a nitrile rubber (NBR) and a hydrogenated nitrile rubber (HNBR). In addition, such a rubber material may contain various additives as needed.

In addition, it is preferable that the rubber elastic body has excellent water resistance. From such a viewpoint, it is more preferable that the rubber elastic body is a cross-linked molded article of a rubber composition containing at least one rubber selected from the EPDM, the NBR and the HNBR, and, among these articles, it is more preferable that the rubber elastic body is a cross-linked molded article of a rubber composition containing at least one of the EPDM and the HNBR.

In addition, the shape of the rubber elastic body (specifically, shape as gasket) is not limited in particular, and can take an arbitrary shape. For example, there are shown a sheet form gasket such as square, rectangle and disk form gaskets, and an annular gasket such as an O ring and a square ring.

### 2. Method for preventing corrosion

The method for preventing corrosion of a surface of an aluminum-based member according to the present invention is characterized in that the method makes a surfactant adhere to the surface of the aluminum-based member. Excellent water repellency is imparted to the surface of the aluminum-based member to which the surfactant has adhered. As a result, a gap between the gasket and the aluminum-based member (seal area in particular) becomes a state in which it is difficult for a corrosive component such as salt water to intrude into the gap due to a water-repellent action of the surfactant and to stay in the gap. Thereby, it is possible to effectively protect the surface (seal area in particular) of the aluminum-based member from corrosion and prevent corrosion from reaching the inside of the seal area, and it is possible for the gasket to maintain a satisfactory sealing function over a long period of time.

### 2-1. Surfactant

The surfactant adheres to the surface of the aluminum-based member, and plays a role of imparting water repellency to the surface.

As for such a surfactant, for instance, carboxylic acids such as lauric acid, myristic acid, palmitic acid, stearic acid and arachidic acid, carboxylate such as sodium laurate, salt of phosphoric acid esters such as sodium lauryl phosphate, and sulfonates such as sodium 1-dodecylsufonate can be preferably used. In addition, as for the surfactant, only one type may be used, or two or more types may be used in combination.

It is preferable that when the surfactant has been made to adhere to the surface (aluminum surface) of, for example, a plate made from aluminum, the surfactant can increase a contact angle of water, as compared to the aluminum surface before the adhesion. The contact angle of water means that the larger the contact angle is, the more excellent the water repellency is. Specifically, when the surfactant is compared on the aluminum surface, the surfactant which can increase the contact angle of water after the adhesion as compared to that before the adhesion can impart excellent water repellency also to the surface of the aluminum-based member.

### 2-2. Method for adhering surfactant

The method is not limited in particular as long as the surfactant adheres to the surface of the aluminum-based member, but it is preferable to perform the adhesion by one or both methods preferably of (1) a method of supplying a surfactant which exuded from the gasket in the press contact state to the surface of the aluminum-based member, and (2) a method of applying the surfactant to the surface of the aluminum-based member before sandwiching the gasket.

### (1) Method of supplying surfactant exuded from gasket in a press contact state to surface of aluminum-based member

This method is characterized in that the method uses the gasket which can supply the surfactant to the surface of the aluminum-based member in the press contact state. According to such a method, only by arranging the above described predetermined gasket between the aluminum-based member and the other member, it is possible to make the surfactant adhere to the surface of the aluminum-based member by a use similar to the usual gasket.

The above described predetermined gasket may be any gasket that can supply the surfactant to the surface of the aluminum-based member in the press contact state, and, for example, a gasket can be used which has been molded from a rubber composition blended with the surfactant in such a degree that the surfactant can exude from the surface of the rubber elastic body, or a gasket can be used in which the surfactant exists at least in the inner part of the rubber elastic body in such an impregnated state as to be capable of exuding from the surface of the rubber elastic body.

Particularly, from the viewpoint that the gasket has excellent rubber characteristics and can exhibit excellent corrosion preventing effect over a long period of time, it is preferable to use the gasket which has the rubber elastic body and the surfactant, and in which the surfactant exists at least in the inner part of the rubber elastic body in such an impregnated state that the surfactant can exude from the surface of the rubber elastic body (hereinafter referred to as "gasket for preventing corrosion").

Here, the inner part of the rubber elastic body means all portions other than the surface of the rubber elastic body.

In addition, the impregnated state means such a state that the surfactant permeates at least the inner part of the rubber elastic body, in particular, a gap of a net structure of the rubber elastic body, and is distinguished from a state in which the surfactant is incorporated into the net structure of the rubber elastic body by a chemical bond, like a rubber elastic body that is obtained from the rubber composition in which the surfactant is blended. In addition, the impregnated state, regardless of the forming method, includes all forms in which the surfactant permeates at least the inner part of the rubber elastic body.

In addition, the extent of the impregnated state can be appropriately selected from positions between the surface side and the deep part of the rubber elastic body. The surfactant may permeate the deep part of the rubber elastic body or wholly and uniformly the rubber elastic body, and when the rubber elastic body is a sheet form, for example, the surfactant may permeate only the inner part of the side corresponding to one surface (surface of side which comes in contact with surface of aluminum-based member).

In addition, the state in which the surfactant can exude to the surface of the rubber elastic body is not limited in particular, but such a state is preferable that when the rubber elastic body is used as the gasket, the surfactant gradually exudes to the surface of the gasket due to a clamping pressure, and such a state is also acceptable that the surfactant gradually exudes to the surface of the gasket in a normal state (room temperature and normal pressure).

Such a gasket for preventing corrosion, when sealing the surface of the aluminum-based member, can efficiently supply the surfactant to the surface of the aluminum-based member. In the case where the gasket for preventing corrosion is used, the surfactant is gradually supplied from the gasket side, even when the surfactant which has once adhered to the surface of the aluminum-based member is exposed to salt water or the like for a long period of time and thereby dissolves in the salt water and leaves the surface; and accordingly water repellency on the surface of the aluminum-based member is not impaired, and a corrosion preventing effect is obtained over a long period of time.

In addition, the above described gasket for preventing corrosion is in a state in which the surfactant exists in the impregnated state at least in the inner part of the rubber elastic body and can exude to the surface of the rubber elastic body; accordingly the surfactant tends to easily exude to the surface of the rubber elastic body, as compared to the case where the surfactant is blended in the rubber composition and is incorporated in the rubber structure, as in the Patent Literature 2; and the effect of imparting water repellency to the surface of the aluminum-based member is more excellent.

A preferred method for producing such a gasket for preventing corrosion is as follows.

Specifically, the gasket for preventing corrosion can be produced by making surfactant permeate the rubber elastic body to form a predetermined impregnated state.

The above described method of forming the impregnated state is not limited in particular, and can be performed by a method of immersing the rubber elastic body in a solution containing the surfactant, by a method of applying the solution containing the surfactant to the rubber elastic body and making the surfactant permeate the rubber elastic body by pressurization or the like, and by known treatment similar to the methods. Because of the above reason, the method does not need a large scale facility, and also the treatment is comparatively easy, and is excellent in productivity. Furthermore, the method can use the rubber elastic body which has been molded by using a conventional rubber composition as it is, accordingly is easily applied to an existing gasket, and is excellent in versatility.

Hereinafter, one example of a process for forming the predetermined impregnated state will be specifically described.

Firstly, a rubber elastic body having desired rubber characteristics is prepared, and is immersed in a solution containing the surfactant for a certain period of time. Thereby, the inner part of the rubber elastic body is impregnated with the surfactant.

Here, as the rubber elastic body, the rubber elastic body described in the above described item 1-3 can be used.

In addition, as for the surfactant, it is particularly preferable to use at least one type of lauric acid, myristic acid, palmitic acid, stearic acid and arachidic acid.

A method for preparing a solution containing the surfactant is not limited in particular, and can be performed according to a known method. For example, a type and the concentration of a solvent may be determined according to the type and the characteristics of the surfactant to be used, and an additive and the like may be appropriately selected as needed.

The immersion time period may be appropriately adjusted according to a desired impregnated state (to what extent it is impregnated from the surface), the type of the surfactant and the rubber elastic body, the temperature of the solution in which the rubber elastic body is immersed, and the like; and is preferably 30 minutes to 72 hours, and is more preferably 3 hours to 24 hours. If the immersion time period is too short, the inner part of the rubber elastic body is hard to be impregnated with the surfactant. In addition, because the surfactant becomes a saturated state after the inner part of the rubber elastic body has become a state of being sufficiently impregnated with the surfactant, even if the immersion time period is too long, it cannot be expected that the corrosion preventing effect improves, but there is possibility that the productivity is rather aggravated due to prolongation of the treatment time period, and the deterioration of the rubber characteristics also occurs. Accordingly, it is preferable to appropriately adjust the immersion time period so that the inner part of the rubber elastic body is moderately impregnated with the surfactant and the productivity and rubber characteristics can be adequately maintained, while considering the balance.

In addition, the rubber elastic body after the immersion treatment may be subjected to treatments such as surface cleaning and drying as needed, in such an extent as not to affect the surfactant existing in the inner part of the rubber elastic body in the impregnated state, or further may be stored for a fixed period. Alternatively, the rubber elastic body after the immersion treatment may be pulled out from the solution of the surfactant, drained, and then subjected to an intended use in the state.

### (2) Method of applying surfactant to surface of aluminum-based member before sandwiching the gasket

This method is characterized in that the method makes the surfactant previously adhere to the surface of the aluminum-based member before sandwiching the gasket. According to such a method, even if the existing gasket is used as it is, the surface of the aluminum-based member can be sufficiently protected.

Specifically, according to this method, the type of the gasket is not limited, and not only the usual gasket described in the above described item 1-3 can be used, but also the special gasket described in the above described (1) can be used as needed. In particular, by combining with the above described method (1), it becomes possible to make the surfactant efficiently adhere to the surface of the aluminum-based member, and accordingly is possible to impart excellent water repellency to the surface of the aluminum-based member over a long period of time.

In addition, the method for applying the surfactant is not limited in particular, as long as the method can make the surfactant adhere to the surface of the aluminum-based member, and known application methods can be widely used. Specifically, the methods include: a method of immersing the aluminum-based member in the solution containing the surfactant, and making the surfactant adsorb to the surface; a method of applying the surfactant directly to the surface of the aluminum-based member by a brush, a roller, a stamp or the like; and a method of making the surfactant adhere to the surface of the aluminum-based member by spray coating, vapor deposition or the like. Among the methods, the method of applying the surfactant directly to the surface of the aluminum-based member by the brush or the roller reduces a material loss in such a point that a region can be selected to which the surfactant is desired to adhere, and is efficient. In addition, the method of immersing the aluminum-based member in the solution containing the surfactant is excellent in working efficiency, in such points that a plurality of members can be treated at once, and that the adhesion state can be adjusted depending on the immersion conditions.

Hereinafter, one example of a process for applying the surfactant to the surface of the aluminum-based member will be specifically described.

Firstly, an aluminum-based member for clamping the gasket is prepared, and is immersed in a solution containing a surfactant for a certain period of time, and the surfactant is made to adsorb to the surface of the aluminum-based member.

Here, as the aluminum-based member, the member described in the above described item 1-1 can be used.

In addition, as for the surfactant, it is preferable to use at least one type particularly of a carboxylate, a salt of phosphoric acid ester and a sulfonate.

The method for preparing the solution containing the surfactant is not limited in particular, and can be performed by a known method. For example, a type and a concentration of a solvent may be determined according to the type and the characteristics of the surfactant to be used, and an additive and the like may be appropriately selected as needed.

The immersion time period may be appropriately adjusted according to the type of the aluminum-based member, the state of an oxide film existing on the surface, the type of the surfactant, the temperature of the solution to be immersed, and the like; and is preferably 60 minutes to 24 hours, and is more preferably 2 hours to 12 hours. If the immersion time period is too short, the surfactant is hard to adsorb due to the influence of the oxide film or the like on the surface of the aluminum-based member. In addition, if the immersion time period is too long, since the adsorbing state of the surfactant becomes a saturated state, it cannot be expected that the corrosion preventing effect improves. There is a possibility that the productivity is rather aggravated due to prolongation of the treatment time period. Accordingly, it is preferable to appropriately adjust the immersion time period so that the surfactant moderately adsorbs to the surface of the aluminum-based member, and also so that the productivity can be adequately maintained, while considering the balance.

In addition, the aluminum-based member after the immersion treatment may be subjected to treatments such as surface cleaning and drying as needed, in such an extent as not to affect the surfactant adsorbing to the surface, and further may be stored for a fixed period of time. Alternatively, the aluminum-based member after the immersion treatment may be pulled out from the solution of the surfactant, drained, and be subjected to an intended use in the state.

The embodiments of the present invention have been described above, but the present invention is not limited to the above described embodiments; includes all modes which are included in the concept and claims of the present invention; and can be variously modified within the scope of the present invention.

### Examples

Thereafter, in order to further clarify the effects of the present invention, examples and comparative examples will be described, but the present invention is not limited to these examples.

### [Production of O-ring (gasket)]

### (Reference Example 1)

Firstly, 54 parts by weight of carbon black (made by Seast GSO Tokai Carbon Co., Ltd.), 3 parts by weight of a peroxide crosslinking agent (Percumyl (registered trademark) D, made by NOF CORPORATION), 1 part by weight of an antioxidant (made by NOCRAC CD Ouchi Shinko Chemical Industrial Co., Ltd.) were blended into 100 parts by weight of EPDM (Keltan (registered trademark) K2750, made by Lanxess), and these substances were kneaded by a kneader and an open roll to provide a rubber composition.

Thereafter, the obtained rubber composition was subjected to pressurization crosslinking (primary crosslinking) with the use of an O-ring mold at 180°C for 6 minutes, and oven crosslinking (secondary crosslinking) at 150°C for 4 hours; and an O-ring (rubber elastic body) specified in JIS B2401-1:2012 P10A was molded.

### (Reference Example 2)

Firstly, lauric acid (12 carbon atoms, made by Tokyo Chemical Industry Co., Ltd.) was prepared as the surfactant, and a surfactant solution with 5 mass% concentration was obtained with the use of hexane as a solvent, in a resin container.

Thereafter, the rubber elastic body produced in Reference Example 1 was immersed in the solution of the above described surfactant at room temperature for 18 hours, and was pulled out from this solution; the surface of the rubber elastic body was dried; the surfactant was made to permeate the resultant rubber elastic body; and an O-ring according to Reference Example 2 was obtained.

### (Reference Example 3)

In Reference Example 3, an O-ring was obtained in a similar way to that in Reference Example 2, except that myristic acid (14 carbon atoms, made by Junsei Chemical Co., Ltd.) was used as the surfactant.

### (Reference Example 4)

In Reference Example 4, an O-ring was obtained in a similar way to that in Reference Example 2, except that palmitic acid (16 carbon atoms, made by Tokyo Chemical Industry Co., Ltd.) was used as the surfactant.

### (Reference Example 5)

In Reference Example 5, an O-ring was obtained in a similar way to that in Reference Example 2, except that stearic acid (18 carbon atoms, made by Junsei Chemical Co., Ltd.) was used as the surfactant.

### (Reference Example 6)

In Reference Example 6, an O-ring was obtained in a similar way to that in Reference Example 2, except that arachidic acid (20 carbon atoms, made by Tokyo Chemical Industry Co., Ltd.) was used as the surfactant.

### (Reference Example 7)

In Reference Example 7, an O-ring was obtained in a similar way to that in Reference Example 1, except that when the rubber composition was obtained, 5 parts by weight of the lauric acid (same as in Reference Example 2) was further blended, as the surfactant.

### [Production of laminate]

### (Example 1)

The O-ring produced in Reference Example 2 was sandwiched between two aluminum alloy plates (ADC 12, surface roughness Rz of 6.5 µm) and was clamped at a compression ratio of 17%, and a laminate of the O-ring and the aluminum alloy plates was obtained.

### (Examples 2 to 6)

In Examples 2 to 6, laminates were obtained in a similar way to that in Example 1, except that the O-rings produced in Reference Examples 3 to 7 were used, respectively.

### (Comparative Example 1)

In Comparative Example 1, a laminate was obtained in a similar way to that in Example 1, except that the O-ring produced in Reference Example 1 was used.

### (Example 7)

Firstly, sodium laurate (made by Tokyo Chemical Industry Co., Ltd.) was prepared as the surfactant, and a solution of the surfactant with a concentration of 1 g/L was obtained in a resin container, of which the solvent was water. Thereafter, the aluminum alloy plate (same as that in Example 1) was immersed in the solution of the above described surfactant at 50°C for 3 hours, and an aluminum alloy plate to which the surfactant adhered was obtained.

In Example 7, a laminate was obtained in a similar way to that in Comparative Example 1, except that the aluminum alloy plate obtained in the above way was used, to which the surfactant adhered.

### (Example 8)

In Example 8, a laminate was obtained in a similar way to that in Example 7, except that sodium lauryl phosphate (made by Tokyo Chemical Industry Co., Ltd.) was used as the surfactant.

### (Example 9)

In Example 9, a laminate was obtained in a similar way to that in Example 7, except that sodium 1-dodecylsulfonate (made by FUJIFILM Wako Pure Chemical Industries, Ltd.) was used as the surfactant.

### [Evaluation]

The laminates according to the above described examples and comparative examples were subjected to the following characteristic evaluations. Evaluation conditions of each characteristic are as follows. The results are shown in Table 1.

### [Salt water corrosion test]

Firstly, sodium chloride was added to water in a resin container so that the concentration becomes 5% by mass, and salt water with a liquid temperature of 50°C was prepared. The above described laminates were immersed in the salt water for a certain period of time, then the laminates were pulled out, the laminate were released, and the corrosion states of the seal area (contact surface with O-ring) and the sealed surface (inside of O-ring) of the aluminum alloy plate were checked.

Incidentally, the laminates were immersed in the salt water for holding times of 96 hours, 192 hours, 288 hours, 480 hours and 672 hours for Example 1, for holding times of 96 hours, 192 hours and 288 hours for Example 6 and Comparative Example 1, for holding times of 96 hours and 192 hours for Examples 2 to 5, and for holding times of 120 hours and 240 hours for Examples 7 to 9, respectively.

In addition, as for the check of the corrosion states, an aluminum alloy plate in which there is not corrosion in both of the seal area and the sealed surface was evaluated to be good "O", an aluminum alloy plate in which corrosion was observed in the seal area was evaluated to be acceptable "Δ", and an aluminum alloy plate in which corrosion reached even the sealed surface was evaluated to be poor "×". Incidentally, in the present examples, the cases in which the corrosion states at the holding time of 192 hours were acceptable "Δ" and good "○" were evaluated to have passed. The results are shown in Table 1.

**[Table 1]**

| | Surfactant | | | Salt water corrosion test [h] | | | | |
|---|---|---|---|---|---|---|---|---|
| | O-ring | | Aluminum alloy plate | | | | | |
| | Type | Existential state | Type | 96/120* | 192/240* | 288 | 480 | 672 |
| Example 1 | Lauric acid | Impregnated | - | ○ | ○ | ○ | ○ | ○ |
| Example 2 | Myristic acid | Impregnated | - | ○ | ○ | | | |
| Example 3 | Palmitic acid | Impregnated | - | ○ | ○ | | | |
| Example 4 | Stearic acid | Impregnated | - | ○ | ○ | | | |
| Example 5 | Arachidic acid | Impregnated | - | ○ | ○ | | | |
| Example 6 | Lauric acid | In composition | - | ○ | Δ | × | | |
| Comparative Example 1 | - | | | ○ | **×** | **×** | | |
| Example 7 | - | | Sodium laurate | ○* | ○* | | | |
| Example 8 | - | | Sodium lauryl phosphate | ○* | ○* | | | |
| Example 9 | - | | Sodium 1-dodecylsulfonate | ○* | ○* | | | |

| | | | | | | | | |
|---|---|---|---|---|---|---|---|---|
| (Note) Underlined bold letters in the table indicate samples outside the appropriate range of the present invention, and samples of which the evaluation results do not reach the acceptance level in this example. | | | | | | | | |

As shown in Table 1, it was confirmed that in Comparative Example 1 in which any treatment for making the surfactant adhere to the surface of the aluminum alloy plate was not performed, the corrosion already reached the sealed surface in the salt water corrosion test of the holding time of 192 hours.

On the other hand, it was confirmed that in the case of Examples 1 to 6 using the O-ring which could supply the surfactant to the surface of the aluminum alloy plate, the surfactant could protect the surface (seal area in particular) of the aluminum alloy plate from corrosion, because the O-ring could supply the surfactant to the surface of the aluminum alloy plate even without an operation of previously making the surfactant adhere to the surface of the aluminum alloy plate, and accordingly could make the surfactant adhere to the surface of the aluminum alloy plate.

In addition, it was confirmed that in Example 6, the corrosion already started on the seal area in the salt water corrosion test of the holding time of 192 hours, and furthermore the corrosion reached even to the sealed surface after the holding time of 288 hours. Specifically, it was confirmed that Example 6 which used the O-ring made of a rubber elastic body molded with the use of a rubber composition blended with the surfactant was poor in capability of supplying the surfactant to the surface of the aluminum alloy plate, as compared to Examples 1 to 5 which used the O-ring in which the surfactant existed in the inner part of the rubber elastic body in the impregnated state.

On the other hand, in Examples 1 to 5 using the O-ring in which the surfactant existed in the inner part of the rubber elastic body in the impregnated state, corrosion did not occur on the seal area and the sealed surface, as a result of the salt water corrosion test of the holding time of 192 hours. Furthermore, as for Example 1, the holding time of the salt water corrosion test was extended to 288 hours, 480 hours and 672 hours, and as a result, it was confirmed that corrosion did not occur on the seal area and the sealed surface under any of these conditions. From these results, it has been confirmed that by selectively using the O-ring in which the surfactant exists in the inner part of the rubber elastic body in the impregnated state, the O-ring can protect the surface (seal area in particular) of the aluminum alloy plate from corrosion over a long period of time.

Furthermore, it was confirmed that in the case of Examples 7 to 9 using the aluminum alloy plate having made the surfactant previously adhere to the surface, it was possible to protect the surface (seal area in particular) of the aluminum alloy plate from corrosion over a long period of time, even without using a special O-ring.

It is considered that according to the method for preventing corrosion of a surface of an aluminum-based member of the present invention, it becomes possible to impart high water repellency to the surface of the aluminum-based member over a long period of time, by making the surfactant adhere to the surface of the aluminum-based member. Because of the above reason, high water repellency is exhibited particularly in the gap (seal area in particular) between the gasket and the aluminum-based member, and it becomes a difficult state for the salt water to enter the gap and stay there. It is considered that as a result, the corrosion prevention method can effectively protect the seal area in particular from corrosion, the corrosion does not reach the inside of the seal area, and the gasket can exhibit the excellent sealing function over a long period of time.

## Claims

1. A method for preventing corrosion of a surface of an aluminum-based member constituting a structure that sandwiches a gasket together with another member in a press contact state, **characterized in that**
a surfactant is made to adhere to the surface of the aluminum-based member.

2. The method for preventing corrosion of a surface of an aluminum-based member according to claim 1, wherein
the surfactant exuded from the gasket in the press contact state is supplied to the surface of the aluminum-based member, and thereby
the surfactant is made to adhere to the surface of the aluminum-based member.

3. The method for preventing corrosion of a surface of an aluminum-based member according to claim 1 or 2, wherein
the gasket is a gasket for preventing corrosion including a rubber elastic body and the surfactant, and
the surfactant exists at least in an inner part of the rubber elastic body, in such an impregnated state of being capable of exuding from a surface of the rubber elastic body.

4. The method for preventing corrosion of a surface of an aluminum-based member according to any one of claims 1 to 3, wherein
the rubber elastic body is a cross-linked molded article of a rubber composition containing at least one rubber selected from an ethylenepropylene-diene ternary copolymer rubber (EPDM), a nitrile rubber (NBR) and a hydrogenated nitrile rubber (HNBR).

5. The method for preventing corrosion of a surface of an aluminum-based member according to any one of claims 1 to 4, wherein
the aluminum-based member is made from an aluminum-based alloy.

6. The method for preventing corrosion of a surface of an aluminum-based member according to any one of claims 1 to 5, wherein
the surfactant is applied to the surface of the aluminum-based member before sandwiching the gasket, and thereby the surfactant is made to adhere to the surface of the aluminum-based member.
